# EUROPÄISCHE PATENTANMELDUNG

(11) **EP 4 549 246 A1**
(43) Veröffentlichungstag der Anmeldung: **07.05.2025**
(21) Anmeldenummer: 24193512.1
(22) Anmeldetag: 08.08.2024
(51) Int. Cl.: B60Q 1/00, B60Q 1/24, B62D 33/06

(54) **KABINE FÜR EIN LANDWIRTSCHAFTLICHES ARBEITSFAHRZEUG**

(30) Priorität: 30.10.2023 DE 102023129946
(71) Anmelder: CLAAS KGaA mbH, 33428 Harsewinkel (DE)
(72) Erfinder: Quednau, Alexander, 73776 Altbach (DE); Mildt, Natalie, 73776 Altbach (DE); Grevinga, Markus, 48369 Saerbeck (DE); Matthies, Markus, 33609 Bielefeld (DE); Wagner, Thomas, 33803 Steinhagen (DE); Klaevers, Philipp, 33428 Marienfeld (DE); Jedlitschka, Karim, 33790 Halle (Westfalen) (DE); Spindler, Bert, 33428 Marienfeld (DE)
(74) Vertreter: CLAAS Gruppe

(57) **Zusammenfassung**

Die vorliegende Erfindung betrifft eine Kabine (2) für ein landwirtschaftliches Arbeitsfahrzeug (1), wobei die Kabine (2) einen Kabinenrahmen (3) mit einer Rahmenstruktur (4) umfasst, welche zwei in deren Frontbereich (FB) vorgesehene A-Säulen (8) sowie zwei zu diesen beabstandet im Heckbereich (HB) vorgesehene B-Säulen (9) aufweist, die an ihren Enden durch in Längsrichtung und in Querrichtung der Kabine (2) verlaufende Rahmensegmente (21) miteinander verbunden sind, wobei die Säulen (8, 9) im Wesentlichen vertikal verlaufend angeordnet sind und ein Kabinendach (15) aufnehmen, wobei der Kabinenrahmen (3) der Kabine (2) modular ausgeführt ist und eine in die Rahmenstruktur (4) integrierte Beleuchtungsstruktur (12) umfasst und dass die Kabine (2) eine Steuereinheit (14) aufweist, die dazu eingerichtet ist, die Beleuchtungsstruktur (12) zur zumindest teilweisen Ausleuchtung eines oder mehrerer Arbeitsbereiche und/oder Sichtbereiche des Arbeitsfahrzeugs (1) anzusteuern.

## Beschreibung

Die vorliegende Erfindung betrifft eine Kabine für ein landwirtschaftliches Arbeitsfahrzeug gemäß dem Oberbegriff des Anspruches 1. Weiterhin ist ein landwirtschaftliches Arbeitsfahrzeug mit einer Kabine Gegenstand der vorliegenden Erfindung.

Eine Kabine für ein landwirtschaftliches Arbeitsfahrzeug der eingangs genannten Art ist aus der WO 2023/144663 A1 bekannt. Darin ist ein als Traktor ausgeführtes landwirtschaftliches Arbeitsfahrzeug offenbart, das mit einem Befestigungssystem ausgeführt ist, welches eine bedarfsweise, flexible und lösbare Anbringung von Gebrauchselementen an Säulen der Kabine ermöglicht. Als Gebrauchselemente werden Beleuchtungseinheiten, Anzeigeeinheiten oder Sensorgeräte genannt, die mittels eines als Schienenelement ausgeführten Montageelements lösbar außenseitig an einer Säule der Kabine befestigt werden. Am Kabinendach der Kabine sind Leuchten angeordnet, welche der Ausleuchtung des Traktors dienen. Den zusätzlich an den Säulen der Kabine mittels der Montageelemente befestigten Beleuchtungseinheiten kommt die Aufgabe zu, spezifische Informationen für im Umfeld des Traktors befindliche Fahrzeuge oder Personen zu visualisieren. Die jeweiligen Beleuchtungseinheiten sind dazu an die Art der zu übertragenden Information spezifisch angepasst. So kann eine Beleuchtungseinheit dazu dienen, ein Hindernis anzuleuchten. Eine andere Nutzung einer Beleuchtungseinheit besteht in der Kommunikation in einer Leader-Follower-Konfiguration von Arbeitsfahrzeugen. Hintergrund des aus der WO 2023/144663 A1 bekannten Befestigungssystems ist, eine individuelle Anpassung der in einer Grundausführung hergestellten Kabine, um unterschiedliche Kundenwünsche realisieren zu können oder um eine Nachrüstung oder Umrüstung durch den Austausch oder das Ergänzen von Gebrauchselemente zu vereinfachen.

Ausgehend vom vorstehend genannten Stand der Technik liegt der Erfindung die Aufgabe zugrunde, eine Kabine für ein landwirtschaftliches Arbeitsfahrzeug weiterzubilden, welche systemübergreifend auf landwirtschaftlichen Arbeitsfahrzeugen unterschiedlicher Art einsetzbar ist, wobei die Kabine mit einer für alle Arbeitsfahrzeuge einheitlichen Beleuchtungsstruktur ausgeführt ist.

Diese Aufgabe wird erfindungsgemäß durch eine Kabine für ein landwirtschaftliches Arbeitsfahrzeug mit den Merkmalen des Anspruches 1 sowie ein landwirtschaftliches Arbeitsfahrzeug mit den Merkmalen des Anspruches 13 gelöst. Vorteilhafte Weiterbildungen sind Gegenstand der abhängigen Ansprüche.

Gemäß dem Anspruch 1 wird eine Kabine für ein landwirtschaftliches Arbeitsfahrzeug vorgeschlagen, wobei die Kabine einen Kabinenrahmen mit einer Rahmenstruktur umfasst, welche zwei in deren Frontbereich vorgesehene A-Säulen sowie zwei zu diesen beabstandet im Heckbereich vorgesehene B-Säulen aufweist, die an ihren Enden durch in Längsrichtung und in Querrichtung der Kabine verlaufende Rahmensegmente miteinander verbunden sind, wobei die Säulen im Wesentlichen vertikal verlaufend angeordnet sind und ein Kabinendach aufnehmen.

Die Rahmenstruktur umgibt den Innenraum der Kabine. Die im Wesentlichen vertikal verlaufenden A-Säulen und B-Säulen erstrecken sich zwischen einem Sockelelement und dem Kabinendach.

Erfindungsgemäß ist vorgesehen, dass der Kabinenrahmen der Kabine modular ausgeführt ist und eine in die Rahmenstruktur integrierte Beleuchtungsstruktur umfasst und dass die Kabine eine Steuereinheit aufweist, die dazu eingerichtet ist, die Beleuchtungsstruktur zur zumindest teilweisen Ausleuchtung eines oder mehrerer Arbeitsbereiche und/oder Sichtbereiche des Arbeitsfahrzeugs anzusteuern.

Wesentlich ist dabei, dass der Aufwand bei der Installation der Beleuchtungsstruktur an der Kabine gegenüber der aus dem Stand der Technik bekannten Kabine reduziert wird, da auf ein Befestigungssystem zur individuellen Anordnung von Beleuchtungseinheiten verzichtet wird. Hierzu ist zumindest die Rahmenstruktur systemübergreifend ausgeführt. Zur systemübergreifenden Nutzung der Kabine sind die Rahmenstruktur sowie die in diese integrierte Beleuchtungsstruktur im Wesentlichen als Gleichteile ausgeführt, die für unterschiedliche Arten von Arbeitsfahrzeugen verwendet werden. Die systemübergreifende Nutzung der Rahmenstruktur mit der in diese integrierten Beleuchtungsstruktur der erfindungsgemäßen Kabine für unterschiedliche Arten von landwirtschaftlichen Arbeitsfahrzeugen wird somit durch die einheitliche Ausgestaltung der Rahmenstruktur, unabhängig von der Art des Arbeitsfahrzeugs, sowie die Ansteuerung der ebenfalls einheitlich ausgeführten, in die Rahmenstruktur integrierten Beleuchtungsstruktur mittels der Steuereinheit erreicht. Die Ansteuerung der in die Rahmenstruktur integrierten, einheitlich ausgeführten Beleuchtungsstruktur durch die Steuereinheit erfolgt dabei spezifisch an die Bedarfe der unterschiedlichen landwirtschaftlichen Arbeitsfahrzeuge angepasst.

Arbeitsbereiche sind insbesondere vor und/oder hinter Anbaugeräten oder Vorsatzgeräten am Arbeitsfahrzeug liegende auszuleuchtende Bereiche, auf denen eine Bearbeitung durchzuführen ist. Arbeitsbereiche können sich vor, seitlich neben und/oder hinter dem Arbeitsfahrzeug befinden. Sichtbereiche sind insbesondere temporär auszuleuchtende Bereiche im unmittelbaren Umfeld des Arbeitsfahrzeugs, beispielsweise ein Aufstieg zur Kabine oder ein im rückwärtigen Bereich befindlicher Heckkraftheber oder eine Anhänge- oder Ankoppelvorrichtung.

Die in die Rahmenstruktur integrierte Beleuchtungsstruktur zeichnet sich dadurch aus, dass von außen sichtbare Komponenten der Beleuchtungsstruktur bündig mit der Rahmenstruktur abschließen, d.h. dass die Kontur bzw. die Form eines Abschnitts der Beleuchtungsstruktur, welcher in eine Komponente der Rahmenstruktur integriert ist, dieser folgend ausgebildet ist.

Insbesondere kann die Beleuchtungsstruktur adaptive Lichtmodule umfassen. Dabei können die einzelnen Lichtmodule einteilig oder mehrteilig ausgeführt sein.

Bevorzugt kann die Steuereinheit dazu eingerichtet sein, die Lichtstärke und/oder die Wellenlänge des abgestrahlten Lichts der adaptiven Lichtmodule anzusteuern.

Weiterhin kann die Steuereinheit dazu eingerichtet sein, den Abstrahlwinkel der adaptiven Lichtmodule zu adaptieren.

Insbesondere können sich in die A-Säulen integrierte Lichtmodule der Beleuchtungsstruktur an in Vorwärtsfahrtrichtung weisenden Flächenabschnitten der A-Säulen in vertikaler Richtung im Wesentlichen über die Länge der A-Säulen erstrecken. Weiterhin können an den A-Säulen auf ihren dem Inneren der Kabine zugewandten Seiten Visualisierungseinrichtungen angeordnet sein. Die Visualisierungseinrichtungen können die jeweilige A-Säule ganz oder teilweise überdecken. Die Visualisierungseinrichtungen umfassen Kameras, welche den von den A-Säulen verdeckten Sichtbereich erfassen und auf die Visualisierungseinrichtungen übertragen.

Alternativ oder zusätzlich können Lichtmodule der Beleuchtungsstruktur in eine frontseitige Stirnfläche des Kabinendachs integriert sein und sich im Wesentlichen über die Breite des Kabinendachs erstrecken.

Weiter bevorzugt können Lichtmodule der Beleuchtungsstruktur in die die A-Säulen und die B-Säulen miteinander verbindenden Rahmensegmente oder in sich in Längsrichtung der Kabine erstreckende Seitenflächen des Kabinendachs integriert sein.

Insbesondere können sich in die B-Säulen integrierte Lichtmodule der Beleuchtungsstruktur an im Wesentlichen entgegen der Vorwärtsfahrtrichtung weisenden Flächenabschnitten der B-Säulen in vertikaler Richtung im Wesentlichen über die Länge der B-Säulen erstrecken. Weiterhin können an den B-Säulen auf ihren dem Inneren der Kabine zugewandten Seiten Visualisierungseinrichtungen angeordnet sein. Die Visualisierungseinrichtungen können die jeweilige B-Säule ganz oder teilweise überdecken. Die Visualisierungseinrichtungen umfassen Kameras, welche den von den B-Säulen verdeckten Sichtbereich erfassen und auf die Visualisierungseinrichtungen übertragen.

Bevorzugt kann an den A-Säulen oder an den seitlichen, die A-Säulen und die B-Säulen miteinander verbindenden Rahmensegmenten jeweils eine sich in Querrichtung der Kabine nach außen erstreckende Halteeinrichtung für einen Spiegelersatz eines Spiegelersatzsystems angeordnet sein. Dabei kann das Spiegelersatzsystem in den Halteeinrichtungen angeordnete optische Sensoren umfassen, welche zumindest den rückwärtigen Bereich des Arbeitsfahrzeugs erfassen. Bei den optischen Sensoren handelt es sich bevorzugt um Kameras.

Weiterhin kann in die jeweilige Halteeinrichtung ein Lichtmodul mit dem Heckbereich der Kabine entgegengerichteter Abstrahlrichtung integriert sein.

Des Weiteren können Teile der Beleuchtungsstruktur Bestandteil des Spiegelersatzsystems sein. So können Teile der Beleuchtungsstruktur gezielt angesteuert werden, um den Erfassungsbereich der optischen Sensoren des Spiegelersatzsystems bei Bedarf auszuleuchten.

Besonders vorteilhaft ist es, dass die Steuereinheit dazu eingerichtet ist, die einzelnen Lichtmodule voneinander unabhängig anzusteuern. Somit kann unabhängig von der Art des landwirtschaftlichen Arbeitsfahrzeugs jede Kabine mit einer einheitlichen Beleuchtungsstruktur ausgeführt sein. Dies reduziert Herstellkosten und führt zu einer Erhöhung des Wiedererkennungswertes. Durch eine Anpassung von Steuerungsalgorithmen, die in der Steuereinheit hinterlegbar oder hinterlegt sind, kann eine Individualisierung und/oder eine Anpassung der Ansteuerung der einzelnen Lichtmodule der einheitlich ausgeführten Beleuchtungsstruktur an unterschiedliche Arten von landwirtschaftlichen Arbeitsfahrzeugen erfolgen.

Nach einer weiteren Lehre gemäß Anspruch 13, der eigenständige Bedeutung zukommt, wird ein landwirtschaftliches Arbeitsfahrzeug mit einer Kabine beansprucht. Wesentlich nach dieser weiteren Lehre ist die Ausstattung der Kabine gemäß der erstgenannten Lehre, wobei die Steuereinheit dazu eingerichtet ist, einzelne Lichtmodule der Beleuchtungsstruktur in Abhängigkeit von einer Feldfahrt oder einer Straßenfahrt einsatzspezifisch anzusteuern. Auf alle Ausführungen zu der erfindungsgemäßen Kabine darf verwiesen werden.

Bevorzugt ist das Arbeitsfahrzeug als Traktor oder als selbstfahrende Erntemaschine, insbesondere Mähdrescher oder Feldhäcksler, ausgeführt.

Die vorliegende Erfindung wird nachstehend anhand eines in den Zeichnungen dargestellten Ausführungsbeispieles näher erläutert.

Es zeigen:
- Fig. 1: schematisch und exemplarisch eine perspektivische Ansicht eines landwirtschaftlichen Arbeitsfahrzeugs mit einer erfindungsgemäßen Kabine;
- Fig. 2A: schematisch und exemplarisch eine perspektivische Ansicht eines Kabinenrahmens der Kabine;
- Fig. 2B: schematisch und exemplarisch eine perspektivische Ansicht einer weiteren Ausführung des Kabinenrahmens der Kabine;
- Fig. 3: schematisch und exemplarisch eine perspektivische Ansicht der Kabine gemäß Fig. 1;
- Fig. 4: schematisch und exemplarisch eine Frontansicht der Kabine gemäß Fig. 3; und
- Fig. 5: schematisch und exemplarisch eine Rückansicht der Kabine gemäß Fig. 3.

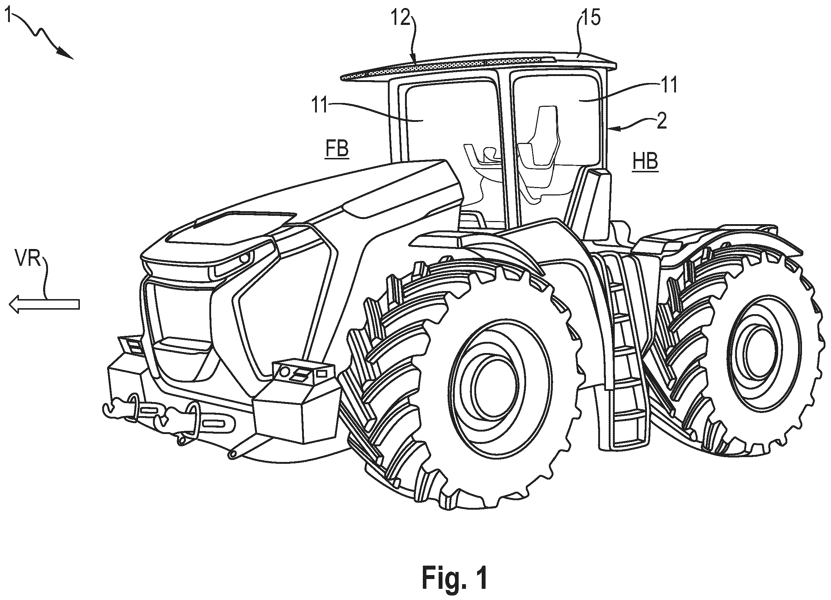

In Fig. 1 ist schematisch und exemplarisch eine perspektivische Ansicht eines landwirtschaftlichen Arbeitsfahrzeugs 1 mit einer erfindungsgemäßen Kabine 2 dargestellt. Das landwirtschaftliche Arbeitsfahrzeug 1 ist als Traktor ausgeführt. Bei dem landwirtschaftlichen Arbeitsfahrzeug 1 kann es sich weiterhin um eine selbstfahrende Erntemaschine handeln, insbesondere einen Mähdrescher oder einen Feldhäcksler, die mit der erfindungsgemäßen Kabine 2 systemübergreifend ausgestattet sein können.

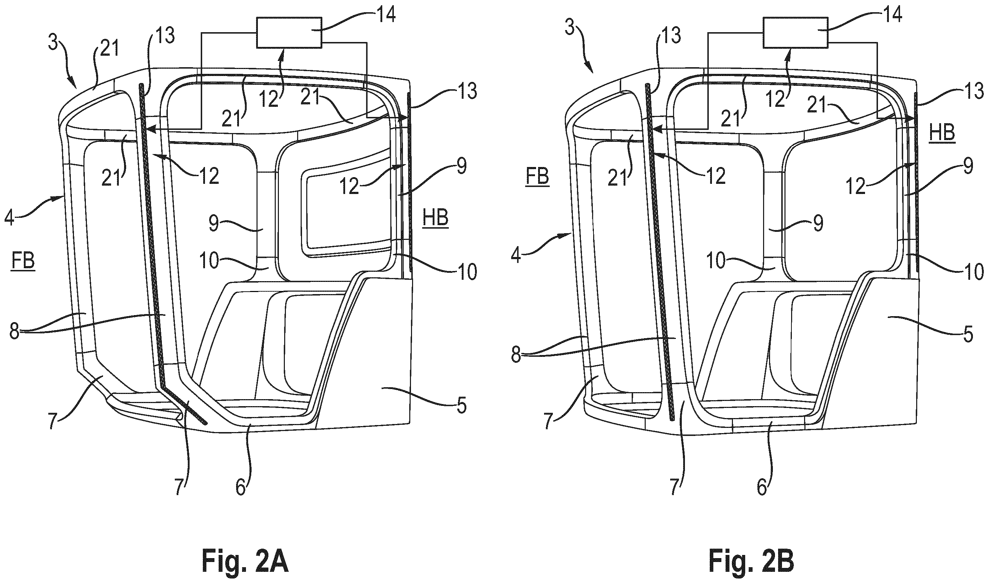

Die erfindungsgemäße Kabine 2 wird nachstehend anhand der Fig. 2A bis Fig. 5 näher erläutert.

Fig. 2A zeigt schematisch und exemplarisch eine perspektivische Ansicht eines Kabinenrahmens 3 der Kabine 2 für ein als Erntemaschine ausgeführtes Arbeitsfahrzeug 1. Fig. 2B zeigt schematisch und exemplarisch eine perspektivische Ansicht des Kabinenrahmens 3 der Kabine 2 für ein als Traktor ausgeführtes Arbeitsfahrzeug 1.

Die Kabine 2 umfasst den Kabinenrahmen 3 mit einer Rahmenstruktur 4. Weiterhin umfasst der Kabinenrahmen 3 ein Sockelelement 5. Die Rahmenstruktur 4 des Kabinenrahmens 3 ist systemübergreifend ausgebildet, sodass diese bei den unterschiedlichen Ausführungen von Arbeitsfahrzeugen 1 verwendet wird. Das Sockelelement 5 gemäß den in Fig. 2 A und 2B beispielhaft dargestellten Ausführungsformen unterscheidet sich nur in den für das jeweilige Arbeitsfahrzeug 1 spezifischen Aspekten.

Bei dem als Erntemaschine ausgeführten Arbeitsfahrzeug 1 weist das in Fig. 2A dargestellte Sockelelement 5 im Frontbereich FB eine vom Bodenabschnitt 6 ausgehend ansteigende Neigung von zwei frontseitigen Säulenabschnitten 7 des Sockelelements 5 auf. Die Säulenabschnitte 7 dienen der Anbindung von im Wesentlichen vertikal verlaufenden A-Säulen 8 der Rahmenstruktur 4 an das Sockelelement 5. Die Neigung der Säulenabschnitte 7 ermöglicht es einer in der Kabine 2 befindlichen Person den Bereich unmittelbar vor und unterhalb der Kabine 2 einzusehen, was bei einem als Erntemaschine ausgeführten Arbeitsfahrzeug 1 notwendig und sinnvoll ist. Im Heckbereich HB der Kabine 2 respektive des Kabinenrahmens 3 befinden sich zwei B-Säulen 9. Die zwei B-Säulen 9 sind durch Säulenabschnitte 10 im Heckbereich HB des Sockelelements 5 angebunden.

Bei dem als Traktor ausgeführten Arbeitsfahrzeug 1 weist das in Fig. 2B dargestellte Sockelelement 5 im Frontbereich FB zwei vom Bodenabschnitt 6 ausgehend im Wesentlichen senkrecht verlaufende frontseitige Säulenabschnitte 7 auf. Im Heckbereich HB des Sockelelements 5 kann sich dieses von dem in Fig. 2B dargestellten durch eine geänderte Formgebung unterscheiden, welche der Anordnung der Kabine 2 im Bereich zwischen und oberhalb von Hinterrädern des als Traktor ausgeführten Arbeitsfahrzeugs 1 geschuldet ist.

Die im Heckbereich HB befindlichen Säulenabschnitte 10 des jeweiligen Sockelelementes 5 sind identisch ausgeführt.

Die A-Säulen 8 und die B-Säulen 9 sind an ihren Enden durch in Längsrichtung und in Querrichtung der Kabine 2 verlaufende Rahmensegmente 21 als Komponenten der Rahmenstruktur 4 miteinander verbunden. Die zwei A-Säulen 8 und die zwei B-Säulen 9 sind im Wesentlichen vertikal verlaufend angeordnet und nehmen ein Kabinendach 15 auf, welches die Kabine 2 nach oben abschließt.

Die freien Bereiche innerhalb der Rahmenstruktur 4 zwischen den beiden A-Säulen 8 und den B-Säulen 9 sowie zwischen den A-Säulen 8 und den B-Säulen 9 des Kabinenrahmens 3 sind durch einzelne Scheiben 11 vollflächig verschlossen. Die einzelnen Scheiben 11 weisen keine zusätzlichen Rahmenelemente auf, welche die freie Sicht aus der Kabine 2 heraus, insbesondere nach vorne und zur Seite, einschränken. Im Fall eines als Traktor ausgeführten Arbeitsfahrzeugs 1 stellt eine entsprechend ausgeführte Scheibe im Heckbereich HB sicher, dass ein Fahrer des Traktors durch die rückwärtige Scheibe die Arbeitsgeräte und die Anhängerkupplung und/oder den Dreipunktanbau sehen kann.

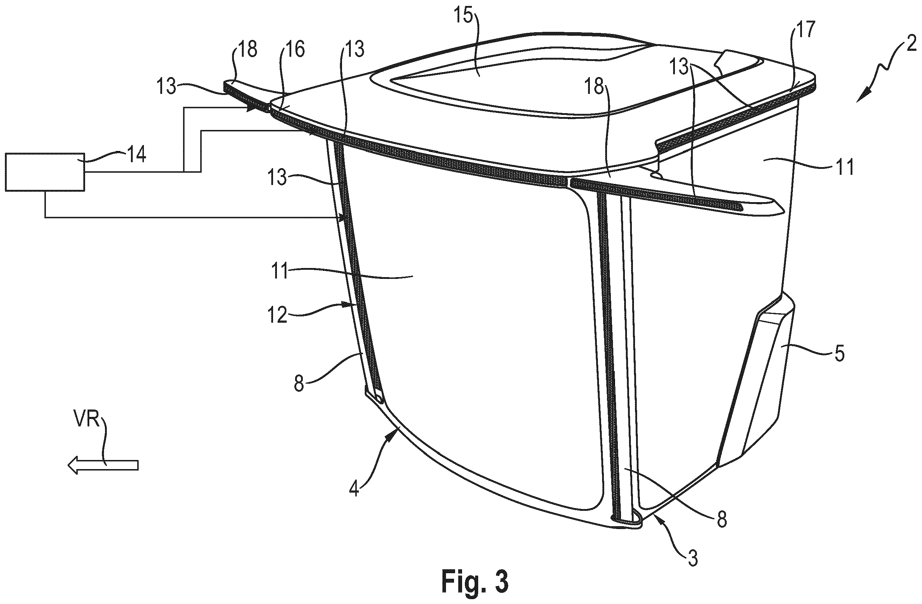

Wie aus den Darstellungen in Fig. 2A und 2B teilweise ersichtlich, umfasst der Kabinenrahmen 3 eine in die Rahmenstruktur 4 integrierte Beleuchtungsstruktur 12. Die Kabine 2 umfasst eine Steuereinheit 14, die dazu eingerichtet ist, die Beleuchtungsstruktur 12 zur zumindest teilweisen Ausleuchtung eines oder mehrerer Arbeitsbereiche und/oder Sichtbereiche des Arbeitsfahrzeugs 1 anzusteuern. Die Beleuchtungsstruktur 12 umfasst mehrere adaptive Lichtmodule 13, von denen jeweils eines in die jeweiligen A-Säule 8 und B-Säule 9 integriert ist. Die Anordnung und Ausführung weiterer adaptiver Lichtmodule 13 der Beleuchtungsstruktur 12 wird anhand der nachfolgenden Fig. 3 bis 5 näher erläutert.

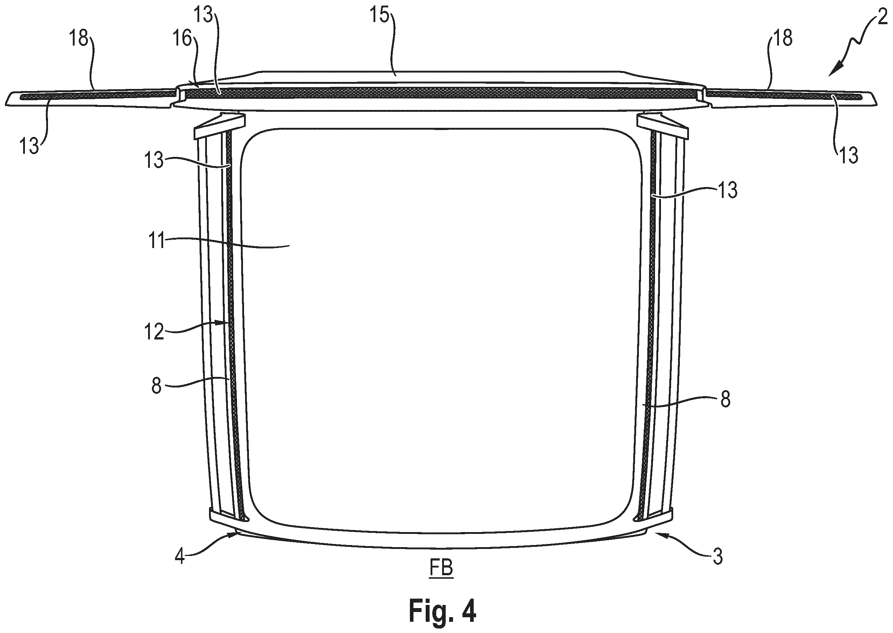

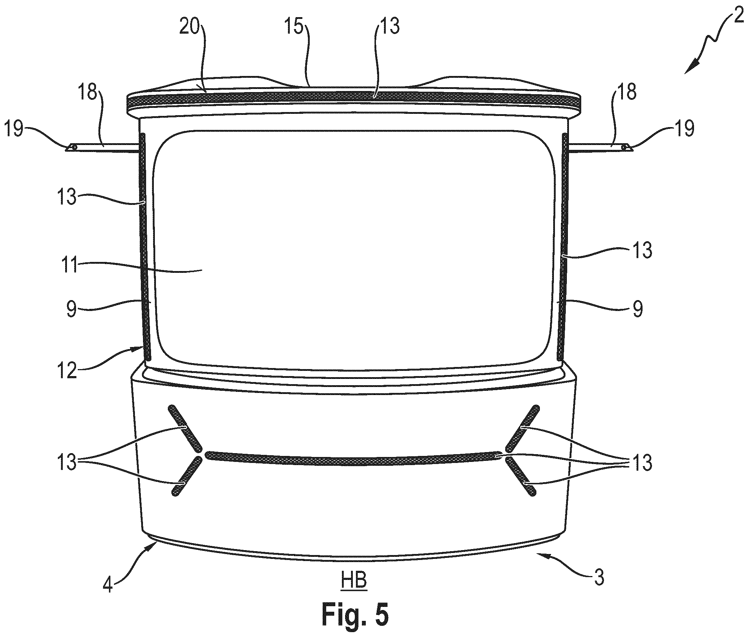

Fig. 3 stellt schematisch und exemplarisch eine perspektivische Ansicht der Kabine 2 gemäß Fig. 1 dar. In Fig. 4 und Fig. 5 ist schematisch und exemplarisch eine Frontansicht der Kabine 2 gemäß Fig. 3 sowie eine Rückansicht der Kabine 2 gemäß Fig. 3 dargestellt.

Die in die beiden A-Säulen 8 integrierten Lichtmodule 13 der Beleuchtungsstruktur 12 erstrecken sich an in Vorwärtsfahrtrichtung VR weisenden Flächenabschnitten der A-Säulen 8 in vertikaler Richtung im Wesentlichen über die Länge der A-Säulen 8.

Alternativ oder zusätzlich können Lichtmodule 13 der Beleuchtungsstruktur 12 in eine frontseitige Stirnfläche 16 des Kabinendachs 15 integriert sein und sich im Wesentlichen über die Breite des Kabinendachs 15 erstrecken.

Weiter bevorzugt können Lichtmodule 13 der Beleuchtungsstruktur 12 in die die A-Säulen 8 und die B-Säulen 9 miteinander verbindenden, in Längsrichtung der Kabine 2 verlaufenden Rahmensegmente 21 oder in sich in Längsrichtung der Kabine 2 erstreckende Seitenflächen 17 des Kabinendachs 15 integriert sein. Bevorzugt kann zumindest ein Lichtmodule 13 in das Kabinendach 15 integriert sein, welches das Kabinendach 15, ausgehend von einer Seitenflächen 17 entlang einer heckseitigen Stirnfläche 20 bis zur gegenüberliegenden Seitenflächen 17, im Wesentlichen U-förmig umschließt.

Insbesondere können sich in die B-Säulen 9 integrierte Lichtmodule 13 der Beleuchtungsstruktur 12 an im Wesentlichen entgegen der Vorwärtsfahrtrichtung VR weisenden Flächenabschnitten der B-Säulen 9 in vertikaler Richtung im Wesentlichen über die Länge der B-Säulen 9 erstrecken.

Weiterhin können an den A-Säulen 8 und/oder den B-Säulen 9 auf ihren dem Inneren der Kabine 2 zugewandten Seiten Visualisierungseinrichtungen angeordnet sein. Die Visualisierungseinrichtungen können die jeweilige A-Säule 8 und/oder B-Säule 9 ganz oder teilweise überdecken. Die Visualisierungseinrichtungen umfassen Kameras, welche den von den A-Säulen 8 bzw. B-Säulen 9 verdeckten Sichtbereich erfassen und auf Monitore der Visualisierungseinrichtungen übertragen. Auf diese Weise wird eine im Wesentlichen unterbrechungsfreie bzw. störungsfreie Sicht aus der Kabine 2 heraus ermöglicht.

Bevorzugt kann an den A-Säulen 8 oder an den seitlichen, die A-Säulen 8 und die B-Säulen 9 miteinander verbindenden Rahmensegmenten 21 jeweils eine sich in Querrichtung der Kabine 2 nach außen erstreckende Halteeinrichtung 18 für einen Spiegelersatz eines Spiegelersatzsystems angeordnet sein. Dabei kann das Spiegelersatzsystem in den Halteeinrichtungen 18 angeordnete optische Sensoren 19 umfassen, welche zumindest den rückwärtigen Bereich des Arbeitsfahrzeugs 1 erfassen.

Teile der Beleuchtungsstruktur 12 können Bestandteil des Spiegelersatzsystems sein. So können einzelne Lichtmodule 13 der Beleuchtungsstruktur 12 gezielt durch die Steuereinheit 14 angesteuert werden, um den Erfassungsbereich der optischen Sensoren 19 des Spiegelersatzsystems bei Bedarf auszuleuchten. Ebenso können beispielsweise die seitlich angeordneten Lichtmodule 13, die sich abschnittsweise in Längsrichtung der Kabine 2 erstrecken, durch die Steuereinheit 14 abgeschaltet werden, um bei einer Rückwärtsfahrt des Arbeitsfahrzeugs 1 Blendeffekte zu vermeiden.

Weiterhin kann in die jeweilige Halteeinrichtung 18 ein Lichtmodul 13 mit dem Heckbereich HB der Kabine 2 entgegengerichteter Abstrahlrichtung integriert sein.

Die einzelnen Lichtmodule 13 können einteilig oder mehrteilig ausgeführt sein. Insbesondere können die Lichtmodule 13 als Matrix-LED ausgeführt sein.

Die Steuereinheit 14 ist dazu eingerichtet, die Lichtstärke und/oder die Wellenlänge des abgestrahlten Lichts der adaptiven Lichtmodule 13 anzusteuern. Weiterhin ist die Steuereinheit 14 dazu eingerichtet, den Abstrahlwinkel der adaptiven Lichtmodule 13 zu adaptieren. Auf diese Weise lässt sich eine verbesserte Ausleuchtung von Arbeitsbereichen und/oder Sichtbereichen durch die Beleuchtungsstruktur 12 erreichen.

Die Steuereinheit 14 ist dazu eingerichtet, die einzelnen Lichtmodule 13 der Beleuchtungsstruktur 12 voneinander unabhängig anzusteuern. Somit kann unabhängig von der Art des landwirtschaftlichen Arbeitsfahrzeugs 1, Traktor oder Erntemaschine, jede Kabine 2 systemübergreifend mit einer einheitlichen Beleuchtungsstruktur 12 ausgeführt sein. Dies reduziert Herstellkosten und führt zu einer Erhöhung des Wiedererkennungswertes. Durch eine Anpassung von Steuerungsalgorithmen, die in einer Speichereinheit der Steuereinheit 14 hinterlegbar oder hinterlegt sind, kann eine Individualisierung und/oder eine Anpassung der Ansteuerung der einzelnen Lichtmodule 13 der einheitlich ausgeführten Beleuchtungsstruktur 12 an unterschiedliche Arten von landwirtschaftlichen Arbeitsfahrzeugen 1 erfolgen.

Die Steuereinheit 14 ist dazu eingerichtet, einzelne Lichtmodule 13 der Beleuchtungsstruktur 12 in Abhängigkeit von einer Feldfahrt oder einer Straßenfahrt einsatzspezifisch anzusteuern. Die Steuereinheit 14 kann dazu eingerichtet sein, Feldfahrt oder Straßenfahrt automatisch zu detektieren. Dabei kann die Steuereinheit 14 die Beleuchtungsstruktur 12 zur zumindest teilweisen Ausleuchtung eines oder mehrerer Arbeitsbereiche und/oder Sichtbereiche des Arbeitsfahrzeugs 1 anzusteuern, um die zumindest teilweise Ausleuchtung zu optimieren, insbesondere bedarfsorientiert zuzuschalten bzw. abzuschalten und/oder anzupassen.

### Bezugszeichenliste

- 1: Arbeitsfahrzeug
- 2: Kabine
- 3: Kabinenrahmen
- 4: Rahmenstruktur
- 5: Sockelelement
- 6: Bodenabschnitt
- 7: Säulenabschnitt
- 8: A-Säule
- 9: B-Säule
- 10: Säulenabschnitt
- 11: Scheibe
- 12: Beleuchtungsstruktur
- 13: Lichtmodul
- 14: Steuereinheit
- 15: Kabinendach
- 16: Frontseitige Stirnfläche
- 17: Seitenfläche
- 18: Halteeinrichtung
- 19: Optischer Sensor
- 20: Heckseitige Stirnfläche

- FB: Frontbereich
- HB: Heckbereich
- VR: Vorwärtsfahrtrichtung

## Patentansprüche

1. Kabine (2) für ein landwirtschaftliches Arbeitsfahrzeug (1), wobei die Kabine (2) einen Kabinenrahmen (3) mit einer Rahmenstruktur (4) umfasst, welche zwei in deren Frontbereich (FB) vorgesehene A-Säulen (8) sowie zwei zu diesen beabstandet im Heckbereich (HB) vorgesehene B-Säulen (9) aufweist, die an ihren Enden durch in Längsrichtung und in Querrichtung der Kabine (2) verlaufende Rahmensegmente (21) miteinander verbunden sind, wobei die Säulen (8, 9) im Wesentlichen vertikal verlaufend angeordnet sind und ein Kabinendach (15) aufnehmen, **dadurch gekennzeichnet, dass** der Kabinenrahmen (3) der Kabine (2) modular ausgeführt ist und eine in die Rahmenstruktur (4) integrierte Beleuchtungsstruktur (12) umfasst und dass die Kabine (2) eine Steuereinheit (14) aufweist, die dazu eingerichtet ist, die Beleuchtungsstruktur (12) zur zumindest teilweisen Ausleuchtung eines oder mehrerer Arbeitsbereiche und/oder Sichtbereiche des Arbeitsfahrzeugs (1) anzusteuern.

2. Kabine (2) nach Anspruch 1, **dadurch gekennzeichnet, dass** die Beleuchtungsstruktur (12) adaptive Lichtmodule (13) umfasst.

3. Kabine (2) nach Anspruch 2, **dadurch gekennzeichnet, dass** die Steuereinheit (14) dazu eingerichtet ist, die Lichtstärke und/oder die Wellenlänge des abgestrahlten Lichts der adaptiven Lichtmodule (13) anzusteuern.

4. Kabine (2) nach Anspruch 2 oder 3, **dadurch gekennzeichnet, dass** die Steuereinheit (14) dazu eingerichtet ist, den Abstrahlwinkel der adaptiven Lichtmodule (13) zu adaptieren.

5. Kabine (2) nach einem der Ansprüche 2 bis 4, **dadurch gekennzeichnet, dass** sich in die A-Säulen (8) integrierte Lichtmodule (13) der Beleuchtungsstruktur (12) an in Vorwärtsfahrtrichtung (VR) weisenden Flächenabschnitten der A-Säulen (8) in vertikaler Richtung im Wesentlichen über die Länge der A-Säulen (8) erstrecken.

6. Kabine (2) nach einem der Ansprüche 2 bis 5, **dadurch gekennzeichnet, dass** zumindest ein Lichtmodul (13) der Beleuchtungsstruktur (12) in eine frontseitige Stirnfläche (16) des Kabinendachs (15) integriert ist und sich im Wesentlichen über die Breite des Kabinendachs (15) erstreckt.

7. Kabine (2) nach einem der Ansprüche 2 bis 6, **dadurch gekennzeichnet, dass** Lichtmodule (13) der Beleuchtungsstruktur in die die A-Säulen (8) und die B-Säulen (9) miteinander verbindenden, in Längsrichtung der Kabine (2) verlaufenden Rahmensegmente (21) oder in sich in Längsrichtung der Kabine (2) erstreckende Seitenflächen (17) des Kabinendachs (15) integriert sind.

8. Kabine (2) nach einem der Ansprüche 2 bis 7, **dadurch gekennzeichnet, dass** sich in die B-Säulen (9) integrierte Lichtmodule (13) der Beleuchtungsstruktur (12) an im Wesentlichen entgegen der Vorwärtsfahrtrichtung (VR) weisenden Flächenabschnitten der B-Säulen (9) in vertikaler Richtung im Wesentlichen über die Länge der B-Säulen (9) erstrecken.

9. Kabine (2) nach einem der Ansprüche 2 bis 8, **dadurch gekennzeichnet, dass** an den A-Säulen (8) oder an den in Längsrichtung verlaufenden, die A-Säulen (8) und die B-Säulen (9) miteinander verbindenden Rahmensegmenten (21) jeweils eine sich in Querrichtung der Kabine (2) nach außen erstreckende Halteeinrichtung (18) für einen Spiegelersatz eines Spiegelersatzsystems angeordnet sind.

10. Kabine (2) nach Anspruch 9, **dadurch gekennzeichnet, dass** in die jeweilige Halteeinrichtung (18) ein Lichtmodul (13) mit dem Heckbereich (HB) der Kabine (2) entgegengerichteter Abstrahlrichtung integriert ist.

11. Kabine (2) nach Anspruch 9 oder 10, **dadurch gekennzeichnet, dass** Teile der Beleuchtungsstruktur (12) Bestandteil des Spiegelersatzsystems sind.

12. Kabine (2) nach einem der vorangehenden Ansprüche, **dadurch gekennzeichnet, dass** die Steuereinheit (14) dazu eingerichtet ist, die einzelnen Lichtmodule (13) voneinander unabhängig anzusteuern.

13. Landwirtschaftliches Arbeitsfahrzeug (1) mit einer Kabine (2) nach einem der vorangehenden Ansprüche, **dadurch gekennzeichnet, dass** die Steuereinheit (14) dazu eingerichtet ist, einzelne Lichtmodule (13) der Beleuchtungsstruktur (12) in Abhängigkeit von einer Feldfahrt oder einer Straßenfahrt einsatzspezifisch anzusteuern.

14. Landwirtschaftliches Arbeitsfahrzeug (1) nach Anspruch 13, **dadurch gekennzeichnet, dass** das Arbeitsfahrzeug (1) als Traktor oder als selbstfahrende Erntemaschine ausgeführt ist.
